# EUROPEAN PATENT SPECIFICATION

(11) **EP 2 352 624 B1**
(45) Date of publication and mention of the grant of the patent: **28.04.2021**
(21) Application number: 09818852.7
(22) Date of filing: 09.10.2009
(51) Int. Cl.: B27K 3/34, B27K 3/50, B27K 3/08, C09D 191/00, C08G 63/91, B27K 3/15, C08L 67/08, C09D 15/00, C09D 167/08

(54) **WOOD IMPREGNATION**
HOLZIMPRÄGNIERUNG
IMPRÉGNATION DE BOIS

(30) Priority: 09.10.2008 FI 20085953
(43) Date of publication of application: 10.08.2011
(73) Proprietor: TIKKURILA OYJ, 01300 Vantaa (FI)
(72) Inventor: KEINÄNEN, Kari, 06100 Porvoo (FI); ERONEN, Riitta, 04400 Järvenpää (FI); SOLJAMO, Kari, 00840 Helsinki (FI); KOSKI, Anna, 15610 Lahti (FI); LEHTO, Jaakko, 02200 Espoo (FI)
(74) Representative: Papula Oy
(86) International application number: PCT/FI2009/050807
(87) International publication number: WO 2010/040902

(56) References cited:
- EP-A1- 0 237 703
- WO-A1-94/18260
- WO-A1-2007/101910
- DE-A1- 19 645 863
- FI-B- 73 619
- US-A- 4 276 329
- US-B1- 6 187 387
- US-B1- 6 787 599

## Description

### Field of the invention

The invention is concerned with wood treatment and relates to impregnation of wood by absorbing emulsion into it by means of pressure difference. With the aid of the invention especially the moisture deformation of the wood can be diminished.

### Technical background

It is well known that the humidity of wood significantly affects its dimensions. In order to achieve dimensional stability, the wood has been impregnated with for example polyglycols and water soluble phenol, urea, acryl or alkyd polymers. One such method is known for example from the publication US 4 276 329.

From the publication FI 73619 (corresponding for example to the publication GB 2 072 505) a wood preservative emulsion is known, which consists of an alkyd resin, a softener, an emulgator, an insecticide and/or a fungicide, a regulator and water.

From the publication WO 02/076696 an emulsion is known, which contains a wood preservative, an organic solvent, a self-emulgating alkyd binder and water

From EP 0237703 an emulsion is known for the dimensional stabilisation of wood by treatment with a composition containing an alkyd resin and an aromatic compound of more than 10 carbon atoms, especially fluoranthene.

### Summary of the invention

Now a method according to claim 1 has been invented, where emulsion is absorbed into the wood. The other claims present some advantageous embodiments of the invention.

The present application provides a method, in which an emulsion is absorbed into wood by means of pressure difference, wherein the emulsion consists of
- 5-50 wt% of an alkyd binder
- one or more emulgators selected from non-ionic emulgators and anionic emulgators, wherein the concentration of emulgators in the emulsion is 1-12 wt-%, and
- water, and
- optionally one or more pH regulators,
- optionally one or more preservatives for emulsion selected from 1,2-benz-isothiazol-3(2H)-one, N-butyl benzisothiazolone, 2-octyl-2H-isothiazol-3-one, 2,2-ditiobis(N-methyl)benzamide, methyl isothiazolinone or zinc pyritione and iodine propynyl butyl carbamate,
- optionally one or more physically acting wood preservatives selected from polyvalent metal salts,
- optionally one or more siccatives selected from cobalt and zirconium salts,
- optionally one or more colouring agent(s),
wherein the emulsion does not substantially contain a biocidally acting wood preservative.

The present application also provides use of an emulsion, which consists of
- 5-50 wt% of an alkyd binder,
- one or more emulgators selected from non-ionic emulgators and anionic emulgators, wherein the concentration of emulgators in the emulsion is 1-12 wt-%, and
- water,
- optionally one or more pH regulators,
- optionally one or more preservatives for emulsion selected from 1,2-benz-isothiazol-3(2H)-one, N-butyl benzisothiazolone, 2-octyl-2H-isothiazol-3-one, 2,2-ditiobis(N-methyl)benzamide, methyl isothiazolinone, zinc pyritione and iodine propynyl butyl carbamate,
- optionally one or more physically acting wood preservatives selected from polyvalent metal salts,
- optionally one or more siccatives selected from cobalt and zirconium salts,
- optionally one or more colouring agents,
wherein the emulsion does not substantially contain a biocidally acting wood preservative, for diminishing moisture deformation of wood, wherein the emulsion is adsorbed into wood by means of pressure difference.

The present application also provides use of an emulsion, which consists of
- 5-50 wt% of an alkyd binder,
- one or more emulgators selected from non-ionic emulgators and anionic emulgators, wherein the concentration of emulgators in the emulsion is 1-12 wt-%, and
- water,
- optionally one or more pH regulators,
- optionally one or more preservatives for emulsion selected from 1,2-benz-isothiazol-3(2H)-one, N-butyl benzisothiazolone, 2-octyl-2H-isothiazol-3-one, 2,2-ditiobis(N-methyl)benzamide, methyl isothiazolinone, zinc pyritione and iodine propynyl butyl carbamate
- optionally one or more physically acting wood preservatives selected from polyvalent metal salts,
- optionally one or more siccatives selected from cobalt and zirconium salts,
- optionally one or more colouring agents,
wherein the emulsion does not substantially contain a biocidally acting wood preservative, for increasing the dimensional stability of wood, wherein the emulsion is adsorbed into wood by means of pressure difference.

The emulsion is absorbed into the wood by means of pressure difference, and does not substantially contain a biocidally acting wood preservative. It is best if the emulsion also does not substantially contain organic solvents, agents that increase hydrophicity of the alkyd, softeners or rheological regulators. The emulsion can contain additives (except substantial amounts of the afore-mentioned wood preservatives). Such additives can be for example pH regulators, emulsion preservatives, physically acting wood preservatives, siccatives and colouring agents. Preferably the emulsion consists substantially of an alkyd binder, an emulgator, water and of afore-mentioned additives (except biocidally acting wood preservatives). The emulsion thus does not contain, in addition to these substances, other active substances, which affect the properties of the treated wood, or other active substances, which affect the properties of the emulsion.

It has surprisingly been noted that by impregnating wood with this emulsion the moisture deformation of the wood is diminished remarkably. In addition a good biological durability is obtained, even though no biocidally acting wood preservative is involved. The wood preserving mechanism of the emulsion is physical.

### Detailed description of the invention

The alkyd binder is manufactured by condensing poly-functional alcohol, poly-functional carboxyl acid and an oil component. The oil component can be oil or a fatty acid derived from oil.

For example the following alcohols can be used: pentaerythritol, glycerol, trimethylol propane, di-trimethylol propane, di-pentaerythritol, ethylene glycol, 1,3-propanediol, 1,4-butanediol, 1,6-hexanediol, diethylene glycol, triethylene glycol, dipropylene glycol, 1,2-propanediol, 1,2-butanediol, 1,3-butanediol, neopentyl glycol, polyethylene glycol, polypropylene glycol, ethoxylated bisfenol-A which has 2-12 ethylene oxide units or propoxylated bisfenol-A which has 2-12 propylene oxide units, or mixtures thereof. Pentaerythritol, glycerol and trimethylol propane are especially suitable.

For example the following carboxyl acids or their anhydrides can be used: isophthalic acid, phthalic acid, terephthalic acid, maleic acid, fumaric acid, itaconic acid, amber acid, adipic acid, azelaic acid, trimellitic acid, pyromellitic acid, tetrahydrophthalic acid, endomethylene tetrahydrophthalic acid, cyclohexane dicarboxyl acid or mixtures thereof. Isophthalic acid, phthalic acid, tetrahydrophthalic acid and maleic acid are especially suitable.

The oil component can be from a vegetative or animal source. For example the following can be used: tall oil, flax oil, soy oil, cotton seed oil, safflower oil, cumin oil, rapeseed oil, coconut oil, castor oil, wood oil, sunflower oil, fish oil, tall oil fatty acid (TOFA), conjugated tall or other fatty acid derivate or mixtures thereof.

Air drying oils and fatty acids, such as tall oil fatty acid, flax oil, soy oil or their mixtures are especially usable. Natural oil always contains several fatty acids, and thus it actually provides a mixture of fatty acids.

The manufacture of alkyd binders is described for example in "The Chemistry of Organic Film Formers", D.H. Solomon, Robert E. Kreiger Publishing Company, 2nd edition, 1977, e.g. on pages 75-124.

The alkyd binder is preferably unmodified. The oil content of the alkyd binder is for example 30-99 %, preferably 50-99 %. Alkyd binders, the components of which are isophthalic acid, pentaerythritol and tall oil fatty acid, are especially usable. The median d50 of the particle size distribution in the alkyd binder in the emulsion can be for example under 5 µm, preferably under 950 nm, more preferably under 600 nm, and most preferably under 400 nm. A small particle size facilitates the penetration of the substance into the pores of the wood. The particle size distribution can be determined for example with light dispersion technique, for example with a Malven Mastersizer 2000 device.

The emulgator is non-ionic or anionic, especially non-ionic. A non-ionic emulgator can for example be one which has ether linkages, with the amount of which the solubility of the substance can be influenced. Such is for example the reaction product of a fatty acid or alcohol and ethylene oxide (EO) or propylene oxide (PEO), where the amount of the recurring EO or PEO unit is 1-40, or the EO or PEO product of C8-C18-oxoalcohol or acid. The solubility of the emulgator in water is described by the HLB value, and emulgators, which have an HLB value of 10-18, form a transparent or clear aqueous solution. Two non-ionic emulgators can also be used, the HLB value of one of which is higher and the other slightly lower. An anionic or polymeric emulgator can further be used as needed in order to improve stability. Emulgators are described for example in Jan W. Gooch, "Emulsification and Polymerization of Alkyd Resins", Kluver Academic Publications, 2001 p. 51.

The content of emulgators in the emulsion is 1-12 wt-%, preferably 3-10 wt-%.

The emulsion does not substantially contain any biocidal wood preservative. By biocidal wood preservative is meant a substance, which is meant to chemically or biologically destroy, control or make harmless the organisms that are harmful to the wood, to prevent their effects or to limit their occurrence in another way.

A pH regulator, especially a substance which neutralizes acid groups, for example ammonia, can be added if desired.

Preferably an emulsion concentrate is first manufactured, which can be diluted while preserving the emulsion texture. The alkyd binder content of the concentrate can be for example 40-80 wt-%. The concentrate is then diluted at the use site into its use concentration. The alkyd content in the emulsion diluted to its use concentration can be for example 5-50 wt-%, preferably 6-25 wt-%. With such a relatively diluted emulsion the absorption of a needless excess into the wood can be prevented. The use of the dilutable emulsion makes possible the regulation of the dry matter content, with which the process can be optimized (i.e. the exact amount of dry matter/m³ needed can be obtained in the wood). This has a great significance to the quality and costs of the final product.

Emulsions that are diluted with water are also easy to wash away from the apparatuses after use and to recycle back into the process, since the emulsion texture is preserved and binder is not separated onto the surfaces. It is desirable to dilute the emulsion to less than 5 %, most preferably to less than 1 %.

The emulsion must also withstand pressures occurring in the impregnation process, pressure cycles and possible temperature rises happening in the process.

The emulsion can generally be manufacture so that a water soluble emulgator is added to water and the thus obtained mixture is mixed with a binder, until a desirable emulsion is obtained. Methods and apparatuses suitable for the manufacturing are described for example in the publications WO 2004/082817 and EP 1 707 256.

The emulsion can be manufactured for example with a continuously working apparatus, whereby water and therein possibly dissolved emulgators are manufactured in their own container, wherefrom the mixture is pumped into the lower part of the mixing cylinder with its own feeding line. Likewise the binder and therein possibly added acid group neutralizing substances and possible emulgators are mixed in their own container, wherefrom they are pumped with their own feeding line into the lower part of the mixing cylinder. The feeding streams are fed into the mixing cylinder at a desired ratio, which in oil-water for emulsions typically is 15:1-5:1 (binder - water). In the mixing cylinder there is a mixer, with which the feeding streams are mixed, typically with a speed of 1000-4000 rpm, and the emulsion is formed. The emulsion exits the mixing cylinder via the line in its top part typically to another mixing cylinder (to the lower part), where water and possible additives can be added to the emulsion, the mixing speed being for example 300-2000 rpm, whereby the emulsion is diluted to a desirable dry matter content. From this cylinder the diluted emulsion is typically led to a collecting vessel.

As additives in the emulsions can be used for example siccatives selected from cobalt or zirconium salts, especially carboxylate (such as octoate) and preservatives. The siccative promotes the drying of the emulsion. A suitable amount is for example 1-5 % of the weight of the emulsion. With a preservative the emulsion can be protected especially against bacteria. As a preservative can be used for example a suitable bactericide, such as 1,2-benz-isothiazol-3(2H)-one, N-butyl benzisothiazolone, 2-octyl-2H-isothiazol-3-one, 2,2-ditiobis(N-methyl)benzamide, methyl isothiazolinone, zinc pyritione or iodine propynyl butyl carbamate. A suitable amount is for example 100-500 ppm, most preferably 150-200 ppm of the weight of the emulsion. The preservative of the emulsion does not have any substantial chemical or biological wood preserving effect.

As additives can also be used physically acting wood preservatives, selected from polyvalent metal salts (e.g. suitable aluminium salts or iron salts, such as hydrous ferrous sulphate or hydrous aluminium sulphate). A suitable amount is for example 0.5-5 % of the weight of the emulsion.

As colouring agents can be used colouring agents usable in paints. The emulsion can also be manufactured as a batch process, whereby water and possible water soluble emulgators are mixed together in a separate vessel. It is mixed until the mixture is clear. The binder and therein possibly added acid group neutralizing substances and possible oil-soluble emulgators are mixed in their own vessel. A metallic mixing vessel and a therein fitting dispersion blade (the ratio of the diameter of the blade to the diameter of the vessel is e.g. ⅓:1-2/3:1) is put in a dissolver (e.g. Dispermat). The mixing speed of the dissolver is set at for example 300-500 rpm and both mixtures are added as an even stream into the mixing vessel. After the adding, for example (5-15 min), the revolutions are increased to for example 1300-2000 rpm and it is mixed for example 10-20 minutes. Thereafter the mixing speed is lowered to for example 300-500 rpm and a desired amount of water is added in order to regulate the dry matter content.

When the emulsion is made so that separate water and binder streams are combined, high dry matter emulsions can be manufactured. The advantage of these is that the emulsion does not need to be strongly alkaline, in order to be stable, but it can be acidic, neutral or alkaline as needed.

The emulsion is absorbed into the wood with pressure difference. Thus especially pressure impregnation methods, vacuum impregnation methods or their combinations can be used. Among such methods can be mentioned for example full cell methods, such as the Bethell process and the modified Bethell process, and empty cell methods, such as the Rüping process and the Lowry process.

One advantage of the emulsion is further its stability within a wide pH range (pH about 2-11). Thus the emulsion can be used several times despite the fact that acid extractives dissolve into it from the wood.

By treating the wood according to the invention a very good dimensional stability and water repulsion is achieved. In addition a good biological durability is achieved. When the emulsion does not contain biocides, the wood can be treated as harmlessly as possible. Thus the wood can be treated and worked safely without particular protective procedures. The wood can also be recycled, decomposed or burned or otherwise destroyed without special devices. When the emulsion does not contain organic solvents, its manufacture and treatment in view of occupational hygiene is easy.

In addition to the dimensional stability and the water repulsion certain other wood use properties are also improved. The wood is more stable and tough, for example cracking is decreased whereby among others the nailing properties of the wood are better. Further, a layer is formed on the surface of the wood from the dried emulsion, which layer among others improves the painting properties. The wood is in a way already primed. Due to the improved properties the life of the wood in the application is prolonged.

The wood to be treated can be for example pine, especially sapwood of pine, birch, spruce or some other wood that can be impregnated. The material can be solid wood (incl. laminated timber), veneer or plywood. The impregnability of the wood can, if desired, be improved with a suitable pre-treatment, for example with mechanical "injecting", steaming or microwave treatment. Applications for the treated material are especially weather susceptible targets, such as outer walls, terraces, fences and various other garden structures.

Examples of the invention are further presented below.

### Example 1. Alkyd emulsion 1

100 g of alkyd binder was weighed, the components of which were isophthalic acid, pentaerythritol and tall oil fatty acid (rosin content less than 3 wt-%, acid value c. 200, iodine value min. 150) and the oil content of which was 88 %. 53 g of water, 7 g of Brij® 35 P emulgator and 0.3 g ammonium aqueous solution (28 %) for adjusting the pH were weighed in another vessel. This emulgator is non-ionic and contains lauryl polyethylene glycol ether. It was mixed until everything had dissolved. A 250 ml mixing vessel was put in a dissolver, which had a dispersing blade, the diameter of which was 40 mm. The mixing was started at a speed of 300-500 rpm and both of the mixtures were added at the same time as an even stream. The adding took about 5-10 minutes, whereafter the revolutions were increased to 1300-1800 rpm and continued for 10-20 minutes. The revolutions were lowered to about 300 rpm and 40 g of water was added. Thus a light coloured emulsion was obtained, the dry matter content of which with regard to the binder was 50 wt-% (determined according to the standard ISO - 3251:2008). The pH was 5-6 and the viscosity 30-60 mPas. The median d50 of the particle size distribution was determined with a Malvern Mastesizer 2000 device and it was 0.9 µm.

### Example 2. Alkyd emulsion 2

Mixture A was made by mixing 75 g of water, 15 g of Atlas G5000 (non-ionic polyalkylene glycol ether type) and 30 g of Brij® 35P, until the solution was clear. Mixture B was manufactured by mixing together 600 g of the alkyd binder according to example 1 and 2.5 g of ammonium aqueous solution (28 %), and was mixed until the solution was clear. The mixtures A and B (in a ratio of 1:5) were fed into the first mixing chamber of a continuously functioning emulgator, where the mixing speed was 2000-3000 rpm. The formed emulsion was led to the subsequent mixing chamber (mixing speed 500-1000 rpm), where the emulsion and diluting water were fed in a ratio of 1.5:1, whereby a diluted emulsion was obtained, the dry matter content of which is about 55 wt-%, the pH 6-7 and the viscosity 100-200 mPas. The median d50 of the particle size distribution was 380 nm.

### Example 3. Impregnation test

Test pieces were sawed from pine sapwood, the dimensions of which pieces were 25x50x500 mm (height, width, length). The pieces were weighed and their humidity was measured before the impregnation. The test pieces were placed in a 2 meter long impregnation basin, the capacity of which was about 300 litres. The load was tied in place with cloths to prevent floating. The impregnation was performed with the emulsion according to example 1, which was diluted with water to a dry matter content of 48 %, which impregnation included the following stages: underpressure - absorption of the impregnation solution - overpressure - removal of impregnation solution - underpressure. Duration and pressures of the stages: initial underpressure about 15 minutes, 93-100 mbar; overpressure, about 90 minutes, 12 bar; finishing underpressure about 15 minutes, 93-100 mbar. At the end of the treatment excess liquid was removed from the surface of the test pieces and they were placed on battens in a hall to dry. Two parallel impregnation tests were made.

### Example 4. Moisture deformation and water absorption

Test pieces were sawed from timber impregnated according to example 3, the dimensions of which pieces were 25x50x50 mm, so that the moisture deformation could be measured both in the radial, the tangential and the longitudinal direction. The pieces were submerged in water in stands with the depth direction in the vertical direction. Change in the dimensions (radius, tangent, length) and the weight were monitored as a function of time. The moisture deformation and water absorption were compared to pieces sawed from non-impregnated timber. The results are shown in tables 1-4.

**Table 1. Absorption %**

| Time | Composition according to example 1 | Non-im pregnated |
|---|---|---|
| 0 min | 0 | 0 |
| 2 min | 1.73 | 9.58 |
| 6 min | 3.53 | 10.58 |
| 18 min | 4.95 | 12.67 |
| 40 min | 7.59 | 14.59 |
| 2 h | 8.74 | 17.93 |
| 6 h | 10.61 | 23.48 |
| 24 h | 17.72 | 32.47 |
| 30 h | 18.81 | 34.32 |
| 3 days | 23.93 | 39.50 |
| 7 days | 28.79 | 48.43 |

**Table 2. Swelling in the radial direction (%) (thickness)**

| Time | Composition according to example 1 | Non-impregnated |
|---|---|---|
| 0 min | 0 | 0.00 |
| 2 min | 0.04 | |
| 6 min | 0.15 | |
| 18 min | 0.15 | 0.51 |
| 40 min | 0.53 | 0.78 |
| 2 h | 0.72 | 1.37 |
| 6 h | 0.93 | 2.36 |
| 24 h | 1.58 | 3.73 |
| 30 h | 1.67 | 3.94 |
| 3 days | 1.84 | 4.27 |
| 7 days | 2.04 | 6.13 |

**Table 3. Swelling in the grain direction (%) (length)**

| Time | Composition according to example 1 | Non-im pregnated |
|---|---|---|
| 0 min | 0 | 0 |
| 2 min | 0.12 | |
| 6 min | 0.07 | |
| 18 min | 0.03 | 0.44 |
| 40 min | 0.10 | 0.56 |
| 2 h | 0.11 | 0.65 |
| 6 h | 0.09 | 0.65 |
| 24 h | 0.11 | 0.65 |
| 30 h | 0.13 | 0.61 |
| 3 days | 0.15 | 0.61 |
| 7 days | 0.18 | 0.61 |

**Table 4. Swelling in the tangential direction (%) (width)**

| Time | Composition according to example 1 | Non-impregnated |
|---|---|---|
| 0 min | 0 | 0 |
| 2 min | 0.01 | |
| 6 min | 0.25 | |
| 18 min | 0.43 | 0.49 |
| 40 min | 1.03 | 1.30 |
| 2 h | 1.30 | 1.99 |
| 6 h | 1.73 | 3.31 |
| 24 h | 2.62 | 5.07 |
| 30 h | 2.70 | 5.13 |
| 3 days | 2.90 | 5.81 |
| 7 days | 3.09 | 5.96 |

### Example 4. Blue discolouration test

A blue discolouration test was done on wood pieces impregnated with the emulsion according to example 1. The blue discolouration test was done according to the European standard EN 152, part 1. No biocide was added. Non-impregnated comparable wood was used as comparison material.

The impregnated and non-impregnated test pieces were sawed into pieces sized 10x25x95 mm, the ends of which were closed with a 2-component epoxy paint and the pieces were exposed in a weather testing cabinet to QUV conditions for two weeks in a cycle described in standard EN 927-6. Six parallel test members were tested.

After the weather testing cabinet treatment the humidity of the pieces was standardized in a standard atmosphere space. (20°C, relative humidity 65 %). A spore suspension of blueing fungi *Aureobasidium pullulans* DSM 3497 and *Sydowia polyspora* DSM 3498 was manufactured according to standard EN 152.

Before the exposure to the fungi the closed ends of the pieces were cut off, whereby the final length was 90 mm. Sterilized water-vermiculite mixture was put in maintenance vessels. The pieces were dipped in the spore suspension and placed in the vessels on the water-vermiculite mixture in a horizontal position. The vessels were closed and incubated for 6 weeks. Possible fungi growth was then estimated visually using the following scale:
0 no blue discolouration
1 no significant blue discolouration; only individual small spots
2 blue discolouration; at most 1/3 continuously discoloured or at most 1/2 partly discoloured
3 intense blue discolouration; more than 1/3 continuously discoloured or more than 1/2 partly discoloured.

Also the inner parts of the pieces were evaluated. The samples were cut at a distance of 30 mm from the ends. The depth of the non-discoloured zone was measured. The growth inhibition zone was evaluated at a distance of 10 mm from the edges and from the middle of the sample (6 points/sample).

The results are shown in table 5.

**Table 5. Blue discolouration test**

| Impregnation test | Impregnating substance | Growth | Average value | Min, max |
|---|---|---|---|---|
| 3 | The composition of example 1 | 2,2,1,3,2,2 | 2 | min 1 / max 3 |
| 3 | The composition of example 1 | 1,2,2,3,0,0 | 1.3 | min 0 / max 3 |
| | Non-impregnated | Discoloured throughout | | |
| | Non-impregnated | Discoloured throughout | | |

### Example 4. Surface mould test

A surface mould test was done on wood pieces impregnated with the emulsion according to example 1. The test was done according to European standard EN 152, part 1 and the moulds were selected according to standard EN 15457. No biocide was added. Non-impregnated comparable wood was used as comparison material.

The impregnated and non-impregnated test pieces were sawed into pieces sized 10x25x95 mm, the ends of which were closed with a 2-component epoxy paint and the pieces were exposed in a weather testing cabinet to QUV conditions for two weeks in a cycle described in standard EN 927-6. Six parallel test members were tested.

After the weather testing cabinet treatment the humidity of the pieces was standardized in a standard atmosphere space. (20 °C, relative humidity 65 %). A spore suspension of the moulds *Alternaria alternata* DSM 62010, *Aspergillus versicolor* DSM 1943, *Cladosporium cladosporoides* DSM 2121, *Phoma violacae* IMI 049948ii, *Penicillium purpurogenum* DSM 62866 and *Stachybotrys chartarum* DSM 2144 was manufactured according to standard EN 15457.

Before the exposure to the moulds the closed ends of the pieces were cut off, whereby the final length was 90 mm. Sterilized water-vermiculite mixture was put in maintenance vessels. The pieces were dipped in the spore suspension and placed in the vessels on the water-vermiculite mixture in a horizontal position. The vessels were closed and incubated for 12 weeks. Possible mould growth was then estimated visually using the following scale:

| | |
|---|---|
| 0 | no mycocelial filaments on the surface of the test piece |
| 1 | < 10 % of the surface of the test piece covered in mycocelial filaments |
| 2 | 10 % - 30 % of the surface of the test piece covered in mycocelial filaments |
| 3 | 30 % - 50 % of the surface of the test piece covered in mycocelial filaments |
| 4 | 50 % - 100 % of the surface of the test piece covered in mycocelial filaments |

The surfaces of the non-impregnated test pieces were completely covered with mycocelial filaments. The test pieces were also examined with a microscope, since growth was difficult to detect on the surfaces of the impregnated test pieces. The results are shown in table 6.

**Table 6. Surface mould test**

| Impregnation test | Impregnating substance | Growth (visual estimation) | Growth (estimated with microscope) |
|---|---|---|---|
| 3 | The composition of example 1 | 0,0,0,0,1,1, | 1,1,1,2,1,1, |
| 3 | The composition of example 1 | 0,0,0,1,1,2 | 0,0,0,1,1,3 |
| | Non-impregnated | Completely covered with mould | |
| | Non-impregnated | Completely covered with mould | |

## Claims

1. A method in which an emulsion is absorbed into wood by means of pressure difference, **characterized in that** the emulsion consists of
- 5-50 wt% of an alkyd binder,
- one or more emulgators selected from non-ionic emulgators and anionic emulgators, wherein the concentration of the emulgators in the emulsion is 1-12 wt-%, and
- water, and
- optionally one or more pH regulators,
- optionally one or more preservatives for emulsion selected from 1,2-benz-isothiazol-3(2H)-one, N-butyl benzisothiazolone, 2-octyl-2H-isothiazol-3-one, 2,2-ditiobis(N-methyl)benzamide, methyl isothiazolinon, zinc pyritione and iodine propynyl butyl carbamate,
- optionally one or more physically acting wood preservatives selected from polyvalent metal salts,
- optionally one or more siccatives selected from cobalt and zirconium salts,
- optionally one or more colouring agent(s),
wherein the emulsion does not substantially contain a biocidally acting wood preservative.

2. The method according to claim 1, wherein the emulsion is manufactured so that an emulsion concentrate is diluted with water.

3. The method according to claim 2, wherein the emulsion concentrate contains 40-80 wt-% of the alkyd binder.

4. The method according to any of the claims 1-3, wherein the alkyd binder has been manufactured by condensing a poly-functional alcohol, a poly-functional carboxyl acid and an oil or a fatty acid derived from oil.

5. The method according to any of the claims 1-4, wherein the median d50 of the particle size distribution of the reaction product in the emulsion measured with a Malvern Mastersizer 2000 device is less than 5 µm.

6. The method according to claim 5, wherein the median d50 of the particle size distribution of the reaction product in the emulsion is less than 950 nm.

7. The method according to any of the claims 1-6, wherein the emulsion is absorbed into the wood with a pressure impregnation method, a vacuum impregnation method or a combination of these.

8. Use of an emulsion, which consists of
- 5-50 wt% of an alkyd binder,
- one or more emulgators selected from non-ionic emulgators and anionic emulgators, wherein the concentration of the emulgators in the emulsion is 1-12 wt-%, and
- water,
- optionally one or more pH regulators,
- optionally one or more preservatives for emulsion selected from1 ,2-benz-isothiazol-3(2H)-one, N-butyl benzisothiazolone, 2-octyl-2H-isothiazol-3-one, 2,2-ditiobis(N-methyl)benzamide, methyl isothiazolinone, zinc pyritione and iodine propynyl butyl carbamate,
- optionally one or more physically acting wood preservatives selected from polyvalent metal salts,
- optionally one or more siccatives selected from cobalt and zirconium salts,
- optionally one or more colouring agents
wherein the emulsion does not substantially contain a biocidally acting wood preservative, for diminishing moisture deformation of wood, wherein the emulsion is adsorbed into wood by means of pressure difference.

9. Use of an emulsion, which consists of
- 5-50 wt% of an alkyd binder,
- one or more emulgators selected from non-ionic emulgators and anionic emulgators, wherein the concentration of the emulgators in the emulsion is 1-12 wt-%, and
- water,
- optionally one or more pH regulators,
- optionally one or more preservatives for emulsion selected from1 ,2-benz-isothiazol-3(2H)-one, N-butyl benzisothiazolone, 2-octyl-2H-isothiazol-3-one, 2,2-ditiobis(N-methyl)benzamide, methyl isothiazolinone, zinc pyritione and iodine propynyl butyl carbamate,
- optionally one or more physically acting wood preservatives selected from polyvalent metal salts,
- optionally one or more siccatives selected from cobalt and zirconium salts,
- optionally one or more colouring agents
wherein the emulsion does not substantially contain a biocidally acting wood preservative, for increasing the dimensional stability of wood, wherein the emulsion is adsorbed into wood by means of pressure difference.

## Patentansprüche

1. Verfahren, bei dem eine Emulsion mittels Druckdifferenz in Holz absorbiert wird, **dadurch gekennzeichnet, dass** die Emulsion besteht aus:
- 5-50 Gew.-% eines Alkyd-Bindemittels,
- einem oder mehreren Emulgator(en), ausgewählt aus nichtionischen Emulgatoren und anionischen Emulgatoren, wobei die Konzentration der Emulgatoren in der Emulsion 1-12 Gew.-% beträgt, und
- Wasser, und
- optional einem oder mehreren pH-Regulator(en),
- optional einem oder mehreren Konservierungsmittel(n) für eine Emulsion, ausgewählt aus 1,2-Benzisothiazol-3(2H)-on, N-Butyl-benzisothiazolon, 2-Octyl-2H-isothiazol-3-on, 2,2-Ditiobis(N-methyl)benzamid, Methylisothiazolinon, Zink-Pyrithion und Iod-Propinylbutylcarbamat,
- optional einem oder mehreren physikalisch wirkenden Holzschutzmittel(n), ausgewählt aus mehrwertigen Metallsalzen,
- optional einem oder mehreren Trockenstoff(en), ausgewählt aus Kobalt- und Zirkoniumsalzen,
- optional einem oder mehreren Farbstoff(en),
wobei die Emulsion im Wesentlichen kein biozid wirkendes Holzschutzmittel enthält.

2. Verfahren nach Anspruch 1, wobei die Emulsion hergestellt ist, so dass ein Emulsionskonzentrat mit Wasser verdünnt ist.

3. Verfahren nach Anspruch 2, wobei das Emulsionskonzentrat 40-80 Gew.-% des Alkyd-Bindemittels enthält.

4. Verfahren nach einem der Ansprüche 1 bis 3, wobei das Alkyd-Bindemittel durch Kondensation eines polyfunktionellen Alkohols, einer polyfunktionellen Carbonsäure und eines Öls, oder einer von Öl erlangten Fettsäure, hergestellt worden ist.

5. Verfahren nach einem der Ansprüche 1 bis 4, wobei der Median d50 der Partikelgrößenverteilung des Reaktionsprodukts in der Emulsion, gemessen mit einem Malvern-Mastersizer-2000-Gerät, weniger als 5 µm beträgt.

6. Verfahren nach Anspruch 5, wobei der Median d50 der Partikelgrößenverteilung des Reaktionsprodukts in der Emulsion weniger als 950 nm beträgt.

7. Verfahren nach einem der Ansprüche 1 bis 6, wobei die Emulsion mit einem Druckimprägnierungsverfahren, einem Vakuumimprägnierungsverfahren, oder einer Kombination aus diesen, in das Holz absorbiert ist.

8. Verwendung einer Emulsion, die besteht aus:
- 5-50 Gew.-% eines Alkyd-Bindemittels,
- einem oder mehreren Emulgator(en), ausgewählt aus nichtionischen Emulgatoren und anionischen Emulgatoren, wobei die Konzentration der Emulgatoren in der Emulsion 1-12 Gew.-% beträgt, und
- Wasser,
- optional einem oder mehreren pH-Regulator(en),
- optional einem oder mehreren Konservierungsmittel(n) für eine Emulsion, ausgewählt aus 1,2-Benzisothiazol-3(2H)-on, N-Butyl-benzisothiazolon, 2-Octyl-2H-isothiazol-3-on, 2,2-Ditiobis(N-methyl)benzamid, Methylisothiazolinon, Zink-Pyrithion und Iod-Propinylbutylcarbamat,
- optional einem oder mehreren physikalisch wirkenden Holzschutzmittel(n), ausgewählt aus mehrwertigen Metallsalzen,
- optional einem oder mehreren Trockenstoff(en), ausgewählt aus Kobalt- und Zirkoniumsalzen,
- optional einem oder mehreren Farbstoff(en),
wobei die Emulsion im Wesentlichen kein biozid wirkendes Holzschutzmittel enthält, zur Verminderung von Feuchtigkeitsverformung von Holz, wobei die Emulsion mittels Druckdifferenz in Holz adsorbiert wird.

9. Verwendung einer Emulsion, die besteht aus:
- 5-50 Gew.-% eines Alkyd-Bindemittels,
- einem oder mehrere Emulgator(en), ausgewählt aus nichtionischen Emulgatoren und anionischen Emulgatoren, wobei die Konzentration der Emulgatoren in der Emulsion 1-12 Gew.-% beträgt, und
- Wasser,
- optional einem oder mehreren pH-Regulator(en),
- optional einem oder mehreren Konservierungsmittel(n) für eine Emulsion, ausgewählt aus 1,2-Benzisothiazol-3(2H)-on, N-Butyl-benzisothiazolon, 2-Octyl-2H-isothiazol-3-on, 2,2-Ditiobis(N-methyl)benzamid, Methylisothiazolinon, Zink-Pyrithion und Iod-Propinylbutylcarbamat,
- optional einem oder mehreren physikalisch wirkenden Holzschutzmittel(n), ausgewählt aus mehrwertigen Metallsalzen,
- optional einem oder mehreren Trockenstoff(en), ausgewählt aus Kobalt- und Zirkoniumsalzen,
- optional einem oder mehreren Farbstoff(en),
wobei die Emulsion im Wesentlichen kein biozid wirkendes Holzschutzmittel enthält, um die Formstabilität von Holz zu erhöhen, wobei die Emulsion mittels Druckdifferenz in Holz adsorbiert wird.

## Revendications

1. Procédé dans lequel une émulsion est absorbée dans le bois par différence de pression, **caractérisé en ce que** l'émulsion est constituée de
- 5 à 50 % en poids d'un liant alkyde,
- d'un ou plusieurs agents émulsionnants sélectionnés parmi des agents émulsionnants non-ioniques et des agents émulsionnants anioniques, dans lequel la concentration des agents émulsionnants dans l'émulsion est de 1 à 12 % en poids, et
- d'eau, et
- facultativement d'un ou plusieurs régulateurs de pH,
- facultativement d'un ou plusieurs conservateurs pour émulsion sélectionnés parmi la 1,2-benzisothiazol-3(2H)-one, la N-butyl benzisothiazolone, la 2-octyl-2H-isothiazol-3-one, le 2,2-dithiobis(N-méthyl)benzamide, la méthyl isothiazolinone, la pyrithione de zinc et le butylcarbamate d'iodopropynyle,
- facultativement d'un ou plusieurs conservateurs de bois à action physique sélectionnés parmi des sels de métaux polyvalents,
- facultativement d'un ou plusieurs siccatifs sélectionnés parmi les sels de cobalt et de zirconium,
- facultativement d'un ou plusieurs agents colorants,
dans lequel l'émulsion ne contient essentiellement aucun conservateur de bois à effet biocide.

2. Procédé selon la revendication 1, dans lequel l'émulsion est fabriquée de façon qu'un concentré d'émulsion est dilué avec de l'eau.

3. Procédé selon la revendication 2, dans lequel le concentré d'émulsion contient de 40 à 80 % en poids de liant alkyde.

4. Procédé selon l'une quelconque des revendications 1 à 3, dans lequel le liant alkyde a été fabriqué en condensant un alcool polyfonctionnel, un acide carboxylique polyfonctionnel et une huile ou un acide gras dérivé d'une huile.

5. Procédé selon l'une quelconque des revendications 1 à 4, dans lequel la médiane d50 de la distribution granulométrique du produit de réaction dans l'émulsion mesurée avec un dispositif Malvern Mastersizer 2000 est inférieure à 5 µm.

6. Procédé selon la revendication 5, dans lequel la médiane d50 de la distribution granulométrique du produit de réaction dans l'émulsion est inférieure à 950 nm.

7. Procédé selon l'une quelconque des revendications 1 à 6, dans lequel l'émulsion est absorbée dans le bois par un procédé d'imprégnation sous pression, un procédé d'imprégnation sous vide ou une combinaison de ceux-ci.

8. Utilisation d'une émulsion, qui est constituée de
- 5 à 50 % en poids d'un liant alkyde,
- d'un ou plusieurs agents émulsionnants sélectionnés parmi des agents émulsionnants non-ioniques et des agents émulsionnants anioniques, dans laquelle la concentration des agents émulsionnants dans l'émulsion est de 1 à 12 % en poids, et
- d'eau,
- facultativement d'un ou plusieurs régulateurs de pH,
- facultativement d'un ou plusieurs conservateurs pour émulsion sélectionnés parmi la 1,2-benzisothiazol-3(2H)-one, la N-butyl benzisothiazolone, la 2-octyl-2H-isothiazol-3-one, le 2,2-dithiobis(N-méthyl)benzamide, la méthyl isothiazolinone, la pyrithione de zinc et le butylcarbamate d'iodopropynyle,
- facultativement d'un ou plusieurs conservateurs de bois à action physique sélectionnés parmi des sels de métaux polyvalents,
- facultativement d'un ou plusieurs siccatifs sélectionnés parmi les sels de cobalt et de zirconium,
- facultativement d'un ou plusieurs agents colorants,
dans lequel l'émulsion ne contient essentiellement aucun conservateur de bois à effet biocide,
pour diminuer la déformation du bois par l'humidité, dans laquelle l'émulsion est adsorbée dans le bois par différence de pression.

9. Utilisation d'une émulsion, qui est constituée de
- 5 à 50 % en poids d'un liant alkyde,
- d'un ou plusieurs agents émulsionnants sélectionnés parmi des agents émulsionnants non-ioniques et des agents émulsionnants anioniques, dans lequel la concentration des agents émulsionnants dans l'émulsion est de 1 à 12 % en poids, et
- d'eau, et
- facultativement d'un ou plusieurs régulateurs de pH,
- facultativement d'un ou plusieurs conservateurs pour émulsion sélectionnés parmi la 1,2-benzisothiazol-3(2H)-one, la N-butyl benzisothiazolone, la 2-octyl-2H-isothiazol-3-one, le 2,2-dithiobis(N-méthyl)benzamide, la méthyl isothiazolinone, la pyrithione de zinc et le butylcarbamate d'iodopropynyle,
- facultativement d'un ou plusieurs conservateurs de bois à action physique sélectionnés parmi des sels de métaux polyvalents,
- facultativement d'un ou plusieurs siccatifs sélectionnés parmi les sels de cobalt et de zirconium,
- facultativement d'un ou plusieurs agents colorants,
dans lequel l'émulsion ne contient essentiellement aucun conservateur de bois à effet biocide,
pour augmenter la stabilité dimensionnelle du bois, dans laquelle l'émulsion est adsorbée dans le bois par différence de pression.
